# EUROPÄISCHE PATENTSCHRIFT

(11) **EP 2 783 320 B1**
(45) Veröffentlichungstag und Bekanntmachung des Hinweises auf die Patenterteilung: **07.02.2018**
(21) Anmeldenummer: 12798150.4
(22) Anmeldetag: 15.11.2012
(51) Int. Cl.: G06F 21/34

(54) **VERFAHREN ZUM AUTHENTISIEREN EINER PERSON AN EINER SERVERINSTANZ**
METHOD FOR AUTHENTICATING A PERSON AT A SERVER INSTANCE
PROCÉDÉ POUR AUTHENTIFIER UNE PERSONNE SE TROUVANT AU NIVEAU D'UNE INSTANCE DE SERVEUR

(30) Priorität: 22.11.2011 DE 102011119103
(43) Veröffentlichungstag der Anmeldung: 01.10.2014
(73) Patentinhaber: Giesecke+Devrient Mobile Security GmbH, 81677 München (DE)
(72) Erfinder: SCHMALZ, Frank, 81371 München (DE)
(86) Internationale Anmeldenummer: PCT/EP2012/004748
(87) Internationale Veröffentlichungsnummer: WO 2013/075799

(56) Entgegenhaltungen:
- EUN-JUN YOON ET AL: "Robust Secret Key Based Authentication Scheme Using Smart Cards", 1. Januar 2005 (2005-01-01), ADVANCES IN MULITMEDIA INFORMATION PROCESSING - PCM 2005 LECTURE NOTES IN COMPUTER SCIENCE;;LNCS, SPRINGER, BERLIN, DE, PAGE(S) 723 - 734, XP019024097, ISBN: 978-3-540-30040-3 * 1 Introduction * Seite 726
- HOUSLEY SPYRUS W FORD VERISIGN W POLK NIST D SOLO CITICORP R: "Internet X.509 Public Key Infrastructure Certificate and CRL Profile; rfc2459.txt", 19990101, 1. Januar 1999 (1999-01-01), XP015008243, ISSN: 0000-0003
- MENEZES A ET AL: "Handbook of Applied Cryptography , IDENTIFICATION AND ENTITY AUTHENTICATION", 1. Januar 1997 (1997-01-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 385 - 424, XP002262234, ISBN: 978-0-8493-8523-0 Seite 398

## Beschreibung

Die Erfindung betrifft ein Verfahren zum Authentisieren einer Person an einer Serverinstanz, einen tragbaren Datenträger zur Verwendung als ein Authentisierungsmittel sowie eine Serverinstanz zum Bereitstellen von Dienstleistungen für eine Person, wobei zuvor eine Authentisierung der Person durchgeführt wird.

Prinzipiell ist zwischen den Begriffen Authentifizieren und Authentisieren zu unterscheiden. Bei einer Authentifizierung zwischen einer ersten und einer zweiten Instanzen authentisiert sich die eine erste Instanz, während die zweite Instanz die erste Instanz authentifiziert. Authentifizierung ist demnach ein Nachweis, also eine Verifizierung einer behaupteten Eigenschaft einer Instanz. Die eine Authentifizierung abschließende Bestätigung wird auch als Autorisierung bezeichnet und bezüglich der behaupteten Eigenschaft gilt die authentifizierte Instanz dann als authentisch.

Dabei ist oftmals die Identifizierung der ersten Instanz ein Bestandteil der Authentifizierung. Eine Identifizierung ist der Vorgang, der zum eindeutigen Erkennen der ersten Instanz dient. Die Identifizierung erfolgt anhand kennzeichnender Merkmale, wobei es unterschiedliche Identifizierungsmethoden gibt. Es gibt kognitive Identifizierung, beispielsweise das Abfragen von Geheimnis, Passwörtern und PIN, possessive Identifizierung, beispielsweise Vorzeigen und Auswerten von Zugangskarten, existentielle Identifizierung, auch als biometrische Identifizierung bezeichnet, qualifikative Identifizierung, beispielsweise durch Tätigen einer Unterschrift oder Berechnen eines Datums mit Hilfe eines Algorithmus (digitale Signatur) und/ oder geographische Identifizierung, durch Angabe des Ortes an dem man sich befindet. Das kombinieren von unterschiedlichen Identifizierungsmethoden ist dabei nicht ausgeschlossen und erhöht die Sicherheit des Authentisierungsverfahren erheblich.

Eine Instanz im Sinne der Erfindung ist beispielsweise eine Person, ein Gerät oder ein Dokument, dem eine gewisse Autorität beigemessen wird und das der Person zumindest zum Zweck der Authentisierung eindeutig zugeordnet ist. Insbesondere sind elektronische Ausweisdokumente, wie E-Pass, eID, elektronische Führerscheine und der gleichen als Instanz zu verstehen.

Als Serverinstanz wird ein von einer Clientinstanz räumlich entfernter Server-Computer (Hardware) oder ein Anwendungsserver verstanden, die sogenannte e-Services anbietet. Unter E-Services sind alle Dienste und Aktivitäten zusammengefasst, die mittels Computern erstellt und über elektronische Medien, wie das Internet, interaktiv angeboten und ausgeführt werden. Der Begriff Serverinstanz ist in dieser Anmeldung gleichbedeutend mit dem Begriff Anwendungsserver.

Als eine zu übertragende Anwendung, die von dem E-Service angeboten werden, werden beispielsweise Informations- und Bildungsdienste handeln, wie E-Education, E-Learning, E-Teaching, E-Publishing, E-Book, E-Zine und E-Catalog, um Beschaffungs-, Handels- und Bestelldienste wie E-Business, E-Commerce, E-Procurement, E-Cash, E-Shop, E-Intermediary, E-Auction, um kulturelle und administrative Dienste wie E-Culture, E-Government oder E-Vote, um Verbesserung der Dienstleistungen des Marketings, des Produktes oder der Kundenbeziehung, um elektronische Beratung wie E-Consult oder E-Advising.

Als Clientinstanz wird insbesondere ein Daten verarbeitendes Endgerät mit Ein- und Ausgabemitteln verstanden, wobei insbesondere Computer, Laptops, Netbooks, Tablet-PC's, PDAs, Mobilfunkgeräte, Smart Phones oder dergleichen als Clientinstanz verstanden werden. Diese Clientinstanzen sind eingerichtet, mit Hilfe einer Kommunikationsverbindung mit der Serverinstanz e-Services anzufordern, zu empfangen und zu bearbeiten. Um e-Services zu erhalten, ist häufig eine Authentisierung der Clientinstanz an der Serverinstanz vorzusehen. Dies dient zur späteren entgeltlichen Abrechnung, zur Zuordnung und Personalisierung des e-Services zur jeweiligen Clientinstanz oder auch zur Registrierung der Clientinstanz an der Serverinstanz.

Gemäß der für den deutschen Personalausweis herausgegebenen Spezifikationen BSI TR-03110 Version 2.05 vom 14. Oktober 2010 und BSI TR-03130 Version 1.4.1 vom 8. Oktober 2010 des Bundesamt für Sicherheit in der Informationstechnik, kurz BSI, ist es bekannt, einen elektronischen Personalausweis für ein Authentisierungsverfahren in einem elektronischen Kommunikationsnetzwerk, beispielsweise dem Internet, zu verwenden. Zur sicheren Authentisierung ist gemäß der BSI Spezifikation eine aufwendige Infrastruktur notwendig, die im Folgenden kurz beschrieben wird.

Eine Person die sich mit dem elektronischen Personalausweis zum erhalten eines e-Service authentisieren möchte, benötigt eine Clientinstanz in Form eines Heimcomputers, beispielsweise eines Laptops oder eines PC und den neuen Personalausweis. Die Clientinstanz benötigt einen Webbrowser, also ein Computerprogramm zur Darstellung von Websites in dem Kommunikationsnetzwerk. Auf der Clientinstanz ist zusätzlich eine sogenannte Middleware zu installieren, die wiederum eine Public Key Cryptographic Standard Schnittstelle aufweist, insbesondere ist die Cryptographic Token Interface, kurz PKCS#11, zu verwenden. Die Middleware auf der Clientinstanz führt dabei das Auslesen des Personalausweises und das sichere Kommunizieren mit der Serverinstanz durch.

Die Serverinstanz als Anbieter des e-Services benötigt eine sogenannte eID Serversoftware gemäß BSI TR 3130 Version 1.4.1. Diese eID-Serversoftware ist kostenpflichtig beziehungsweise weisen die zur Kommunikation verwendeten digitalen Zertifikate nur eine begrenzte Gültigkeitsdauer auf, sodass für die Serverinstanz erhebliche Kosten entstehen, um eine Authentifizierung einer Person gemäß diesem BSI Standard durchzuführen.

Wenn der Webbrowser eine sichere Internetverbindung zu der Serverinstanz aufgebaut hat, beispielsweise mittels eines hybriden Verschlüsselungsprotokolls wie "Transport Layer Security, TLS" oder "Secure Sockets Layer, SSL" überprüft zunächst der Webbrowser ohne Unterstützung von Personalausweis und Middleware das digitale Zertifikat der Serverinstanz. Da die erwähnte PKCS#11 Schnittstelle alle Informationen bezüglich der Serverinstanz blockiert versucht die Serverinstanz über einen aufgebauten zweiten Kanal direkt mit der Middleware in Kommunikationsverbindung zu treten. Der Informationsaustausch über den zweiten Kanal ist abgesichert. Beispielsweise erfolgt der Austausch mittels eines Simple Object Access Protocols, kurz SOAP oder Reverse Simple Object Access Protocols, kurz PAOS.

Diese Authentisierung ist durch die Verwendung der Middleware auf dem Clientserver sehr komplex und ist auf ressourcenbeschränkten Clientinstanzen, wie beispielsweise PDA, Smart Phones, und Tablet-PC's mitunter nicht durchführbar, da der Umfang der Middleware zu groß ist und die Speicher- bzw. Rechenkapazität derartiger Clientinstanzen nicht ausreicht. Des Weiteren wird der zweite Kanal zur Authentisierung von einigen Webdiensten und/ oder Netzwerkadministratoren per se blockiert, sodass eine derartige Authentisierung der Person nicht flexibel und von allen Clientinstanzen genutzt werden kann.

Darüber hinaus ist eine derartige Authentifizierung für die Serverinstanz mit jährlichen Kosten verbunden, die ggf. durch einen angebotenen e-Service nicht gegenfinanziert werden können. Verwendet die Serverinstanz die eID-Serversoftware nicht, kann die Authentisierung mittels des elektronischen Personalausweises nicht genutzt werden.

Aus dem Dokument "Robust Secret Key Based Authentication Scheme Using Smart Cards", Eun-Jun Yoon et al. geht ein unilaterales Authentifizierungsschema hervor, welches aus zwei Phasen besteht, die sich in eine Registrierungsphase und eine Authentifizierungsphase unterteilen. Bei dem Authentifizierungsschema wird zur Authentifizierung stets das gleiche, frei wählbare Passwort übertragen.

Ferner wird auf die Veröffentlichung "Internet X.509 Public Key Inftrastructure Certificate and CRL Profile" Housley, SPYRUS, W. Ford VeriSign W. Polk NIST D. Solo Citicorp R hingewiesen, in welcher ein Track Protocol für die Internetgemeinschaft gemäß einem Internetstandard spezifiziert wird und zur Diskussion und zu Verbesserungsvorschlägen zu diesem Standard angeregt wird.

Der Erfindung liegt daher die Aufgabe zugrunde, ein Verfahren aufzuzeigen, was eine sichere und einfache Kommunikation über ein Kommunikationsnetzwerk ermöglicht. Insbesondere sollten dabei die Identifizierung und Authentisierung der Person an einer Serverinstanz vereinfacht werden, wobei dennoch ein hohes Maß an Sicherheit gegeben sein sollte. Insbesondere sollten Standardinfrastrukturen verwendbar sein. Darüber hinaus sollten die Identifizierungsdaten geschützt übertragen werden und die Person entscheiden dürfen, welche Identifizierungsdaten zur Authentisierung verwendet werden sollen. Das Verfahren sollte dabei flexibel mit jeglicher Art von Clientinstanz verwendet werden.

Die Aufgabe der Erfindung wird durch die in den nebengeordneten unabhängigen Patentansprüchen beschriebenen Maßnahmen gelöst. Vorteilhafte Ausgestaltungen sind in den jeweils abhängigen Ansprüchen beschrieben.

Insbesondere wird die Aufgabe durch ein Verfahren zum Authentisieren einer Person gegenüber einer Serverinstanz gelöst, wobei der Person ein tragbarer Datenträger zugeordnet ist und der Datenträger räumlich entfernt von der Serverinstanz angeordnet ist. Das erfindungsgemäße Verfahren umfasst zunächst den Schritt des Sendens einer Authentisierungsanfrage von der Serverinstanz. Auf diese Anfrage wird von dem Datenträger eine erste Prüfsumme als digitales Zertifikat an die Serverinstanz gesendet, wobei die erste Prüfsumme anhand zumindest eines, die Person identifizierenden Datensatzes errechnet wird. Anschließend erhält die Serverinstanz einen eingegebenen Datensatzes, wobei das Eingeben des Datensatzes durch die Person erfolgt. In einem Folgeschritt errechnet die Serverinstanz eine zweite Prüfsumme anhand des erhaltenen Datensatzes. In einem Folgeschritt wird die erste Prüfsumme mit der zweiten Prüfsumme in der Serverinstanz verglichen und die Person durch die Serverinstanz authentifiziert, falls der Vergleich ergibt, dass die erste Prüfsumme und die zweite Prüfsumme gleich sind.

Die erste Prüfsumme stellt dabei das angeforderte Zertifikat dar. Insbesondere wird diese erste Prüfsumme ohne den auf der ersten Prüfsumme basierenden Datensatz an die Serverinstanz übertragen. Dies stellt einen wesentlichen Unterschied zu herkömmlichen Zertifikaten dar, da herkömmliche Zertifikate den Datensatz und die Prüfsumme dieses Datensatzes beinhalten.

Da ein Angreifer anhand der ersten Prüfsumme des erfindungsgemäßen Verfahrens nicht erkennen kann, welcher Datensatz zur Authentisierung der Person verwendet wird, kann die Kommunikationsverbindung wesentlich einfacher ausgestaltet werden und auf aufwendige kryptografische Verschlüsselungsmechanismen zum Schutz des Datensatzes verzichtet werden.

Das Verfahren hat insbesondere den Vorteil, dass die Prüfsumme von einer vertrauenswürdigen Instanz, nämlich dem Datenträger bereitgestellt wird, sodass die Serverinstanz anhand des Prüfsummenvergleichs die Authentisierung der Person bestätigen kann. Durch das Verfahren wird eine possessive Identifizierung durchgeführt, da die Person nur durch Verwenden des Datenträgers eine Authentifizierung durch die Serverinstanz erhält.

Die Sicherheit wird wesentlich erhöht, wenn der Datensatz ein Geheimnis, beispielsweise eine PIN, ein Passwort oder dergleichen ist, da zusätzlich zur possessiven Identifizierung auch eine kognitive Identifizierung stattfindet, was auch als die Zwei-Faktor-Authentifizierung bekannt ist.

Der Datensatz auf dessen Basis die erste Prüfsumme berechnet wird ist in einer ersten Ausgestaltung in einem sicheren Speicherbereich in dem tragbaren Datenträger mit abgelegt. Somit kann im Anschluss an die serverinstanzseitige Authentisierungsanfrage der Datenträger dazu eingerichtet sein, die erste Prüfsumme basierend auf den Datensatz zu berechnen und in einem Folgeschritt diese erste Prüfsumme bereitzustellen. In einer Weiterführung dieser Ausgestaltung wird die erste Prüfsumme mittels unterschiedlicher Algorithmen errechnet. Somit ist das Authentisierungsverfahren sicherer gegenüber potentieller Angriffe, beispielsweise einer Man-In-The-Middle Attacke, bei der die Kommunikationsverbindung zwischen Datenträger und Serverinstanz abgehört wird. Durch Verwenden unterschiedlicher Algorithmen werden derartige Attacken wirkungslos, da dem Angreifer nicht bekannt ist, welcher Algorithmus zur augenblicklichen Prüfsummenbildung angewendet wurde.

In einer weiterführenden Ausgestaltung ist in der ersten Prüfsumme die Information enthalten, welcher Algorithmus zur Errechnung der ersten Prüfsumme verwendet wurde. Somit ist die Serverinstanz in der Lage Authentisierungen aufgrund unterschiedlicher Berechnungsalgorithmen zu verarbeiten. Die Information über den verwendeten Algorithmus ist insbesondere codiert, um es Man-In-The-Middle Angreifern zu erschweren, den verwendeten Algorithmus zu erkennen.

Das Einbringen der Prüfsumme erfolgte bevorzugt in einer vertrauenswürdigen Umgebung, insbesondere einer Datenträgerausgabestelle oder bei Herstellung und Personalisierung des Datenträgers. Dies hat den Vorteil, dass auch bei gezieltem Angreifen zum Ausspähen des Datenträgers nicht auf den, die Person identifizierenden Datensatz zurückgegriffen werden kann. Dadurch ist ein höheres Maß an Datenschutz, Manipulationsschutz gegeben und die Notwendigkeit für aufwendige Absicherungen des Datenträgers minimiert sich.
Der, die Person identifizierende Datensatz ist beispielsweise der Vorname, der Nachname, der Geburtsname, der Geburtsort, das Geburtsdatum, der Wohnort, das Alter, die Augenfarbe, die Größe der Person oder ein anderes die Person identifizierendes Datum. In einer weiteren Ausgestaltung ist der Datensatz ein Geheimnis, also eine sensible Information, die nur der Person und dem Datenträger bekannt ist, insbesondere eine PIN, ein Passwort, ein OTP oder dergleichen. Da einem Angreifer das Geheimnis nicht bekannt ist und nur eine erste Prüfsumme dieses Geheimnis von dem Datenträger bereitgestellt wird, ist eine Manipulation oder ein Ausspionieren des Authentifizierungsverfahrens zusätzlich erschwert.
Gemäß der Erfindung wird über mehrere Datensätze jeweils eine erste Prüfsumme errechnet. Diese ersten Prüfsummen unterscheiden sich voneinander, sodass mehrere erste Prüfsummen von, die Person identifizierenden Datensätzen errechnet und an die Serverinstanz gesendet werden. Der Benutzer gibt nun eine Auswahl der Datensätze in den Webbrowser ein, für die eine erste Prüfsumme berechnet wurde. Dadurch ist die Sicherheit des Verfahrens weiter erhöht.

In einer vorteilhaften Ausgestaltung werden alle errechneten ersten Prüfsummen des Datenträgers an die Serverinstanz gesendet. In einem Folgeschritt gibt die Person nur diejenigen Datensätze ein, die zur Authentisierung der Person verwendet werden sollen. Es erfolgt demnach eine Auswahl der zur Identifizierung und Authentifizierung zu verwendenden Datensätze durch die Person selbst. Anhand der Auswahl der eingegebenen Datensätze errechnet die Serverinstanz die jeweils zweiten Prüfsummen und vergleicht die errechneten zweiten Prüfsummen mit den gesendeten ersten Prüfsummen. Die Person wird durch die Serverinstanz authentifiziert falls eine vorbestimmte Anzahl an Vergleichen ergibt, dass die jeweils ersten Prüfsummen mit den entsprechenden zweiten Prüfsummen gleich sind. Eine Zuordnung, welche erste Prüfsumme mit welcher zweiten Prüfsumme zu vergleichen ist, erfolgt entsprechend, wobei mit dem Erhalten der eingegebenen Datensätze in einer Ausgestaltung auch eine unveränderliche Reihenfolge der Datensätze festgelegt ist und beim Fehlen eines Datensatzes aufgrund des Nicht-Auswählens der Person eine entsprechende Markierung erfolgt.

In einer vorteilhaften Ausgestaltung der Erfindung wird die erste Prüfsumme des, die Person eindeutig identifizierenden Datensatzes im tragbaren Datenträger dynamisch errechnet. Dazu wird dem Datensatz vor der Berechnung der ersten Prüfsumme zumindest eine Zufallszahl und/ oder ein Einmalpasswort, kurz OTP, vorangestellt. Die vorangestellte Zufallszahl wird der Serverinstanz mit den eingegebenen Daten mit übertragen, sodass die zweite Prüfsumme auf Basis der Zufallszahl und des eingegebenen Datensatzes in der Serverinstanz errechnet werden kann. Alternativ wird die vorangestellte Zufallszahl der Person auf der Clientinstanz angezeigt und durch die Person als weiterer Datensatz eingegeben. Beide Alternativen haben den Vorteil, dass die Kombination aus eingegebenem Datensatz und der entsprechenden ersten Prüfsumme nur für eine Authentisierungsanfrage gültig ist und seitens der Serverinstanz nicht missbräuchlich weiterverwendet werden kann. Ein Gewinn an Sicherheit und Datenschutz ist die Folge.

In einer vorteilhaften Weiterbildung dieser Ausgestaltung wird eine Signatur über den Datensatz mit der Zufallszahl ebenfalls dynamisch im tragbaren Datenträger errechnet und an die Serverinstanz übertragen. Somit wird für jede Authentisierungsanfrage ein neues gültiges Zertifikat durch den tragbaren Datenträger zur Authentifizierung der Person erstellt.

In einer Weiterbildung der Erfindung wird neben der Zufallszahl und/ oder OTP eine Transaktionsnummer erzeugt. Diese Transaktionsnummer, auch als Transaktions-ID bezeichnet, kann ebenfalls auf Basis einer Zufallszahl erzeugt werden oder im einfachen Fall eine Zufallszahl sein. Die Transaktionsnummer und die vorangestellte Zufallszahl werden in einer Ausgestaltung der Erfindung wie der zumindest eine einzugebende Datensatz an die Serverinstanz übertragen und auf der Webseite der Serverinstanz für die sich authentisierende Person angezeigt.

Bevorzugt wird die Transaktionsnummer und die Zufallszahl zusammen mit dem zumindest einen einzugebenden Datensatz von der Person eingegeben. Durch diese Weiterbildung wird unterbunden, dass Kombinationen aus Datensätzen und Zertifikaten mit den ersten Prüfsummen seitens der Serverinstanz weiterverwendet werden können.

Ein Dritter, der die Kombination aus Datensatz und Zertifikat mit Prüfsumme erhalten würde, beispielsweise durch Kauf dieser Kombinationen, erhält lediglich die Information, dass sich die Person authentifizieren konnte. Bei einer erneuten Authentisierung der Person werden gegebenenfalls eine alternative Zufallszahl und/ oder eine alternative Transaktionsnummer erzeugt. Dadurch ist es für den Dritten nicht erkennbar, ob sich nur die Zufallszahl oder die Zufallszahl und die Transaktionsnummer gegenüber der letzten Authentifizierung geändert haben. Somit sind insbesondere diese Kombinationen für die Serverinstanz nicht mehr kommerziell nutzbar, beispielsweise durch Verkauf der Kombination an Dritte.

In einer alternativen Ausgestaltung wird der zur Erstellung des Zertifikats verwendete Schlüssel ebenfalls dynamisch erzeugt. Das Zertifikat wird vom Datenträger mit Hilfe eines Gruppenschlüssels errechnet. Dadurch wird erreicht, dass die Serverinstanzen, die den zumindest einen zertifizierten Datensatz untereinander zwar austauschen können, allerdings den eigentlichen Datensatz nicht anhand eines üblicherweise dem Benutzer eindeutig zugeordneten öffentlichen Teils eines kryptograpfischen Schlüsselpaars abgleichen können.

Bei einem erfindungsgemäßen tragbaren Datenträger handelt es sich vorzugsweise um einen Datenträger mit entsprechenden Sicherheitsfunktionalitäten, wie z.B. eine Smart Card, eine Chipkarte, ein Token, eine Massenspeicherkarte, eine Multimediakarte, eine Teilnehmeridentifikationskarte in einem mobilen Funknetz und/ oder insbesondere um ein elektronisches Identitätsdokument, wie beispielsweise ein elektronischer Personalausweis, ein elektronischer Schüler- bzw. Studentenausweis oder ein elektronischer Reisepass mit, auf einem Chip gespeicherten maschinenlesbaren Identifikationsdaten der Person.

Alternativ ist der tragbare Datenträger als ein Sicherheitselement in Form einer Hardwarekomponente ausgestaltet und dabei als ein fest integrierter Bestandteil in der Clientinstanz angeordnet, wobei es entweder in der Form nicht aus der Clientinstanz entnommen werden kann, beispielsweise als M2M-Modul, Co-Prozessor, Trusted Base, Trusted Platform Module, als Teil einer Trusted Computing Technologie oder als ein entnehmbares Modul mit Sicherheitsfunktionalität in der Clientinstanz verbunden, beispielsweise als Subscriber Identification Module, kurz SIM.

Alternativ ist der tragbare Datenträger eine Softwarekomponente in Form einer Trusted Execution Environment (TEE) und daher als vertrauenswürdiger Teil eines Betriebssystemkernels der Clientinstanz bzw. als ein Sicherheitssoftware-Algorithmus ausgestaltet. Derartige Sicherheitselemente prüfen die Systemintegrität eines elektronischen Geräts, indem geräteneutrale und benutzerneutraler Daten des Geräts erhoben, ausgewertet und weitergegeben werden. Solche gerätegebundene Daten, die aufgrund ihrer Beschaffenheit oder über ihr Vorliegen in dem Sicherheitselement eindeutig dem Gerät zugeordnet sind, können somit die Vertrauenswürdigkeit des Geräts oder des Benutzers des Geräts gegenüber Dritten ausweisen.

Eine Prüfsumme ist das Ergebnis eines mathematischen oder kryptografischen Algorithmus zur Gewährleistung von Datenintegrität bei der Datenübermittlung. Dabei sind verschiedenste Algorithmen für diese Erfindung anwendbar. Die Prüfsumme ist insbesondere eine Einweg-Prüfsumme, sodass auf Basis der Prüfsumme nicht auf den basierenden Datensatz zurückgeschlossen werden kann. Diese Prüfsumme ist nicht trivial errechenbar oder nachberechenbar. Insbesondere ist ein kryptografisch starker Algorithmus, beispielsweise eine Einweg-Hash-Funktionen zur Errechnung der Prüfsumme zu verwenden. Durch die Verwendung von Hash Funktionen zur Errechnung von Prüfsummen werden die Manipulationssicherheit und zwangsläufig die Sicherheit des Authentifizierungsverfahrens in vorteilhafter Weise erhöht.

In einer bevorzugten Ausgestaltung weist der Datenträger eine erste Kommunikationsverbindung mit einer Clientinstanz auf, um die erste Prüfsumme an die Clientinstanz zu senden. Diese erste Kommunikationsverbindung ist beispielsweise kontaktbehaftet oder kontaktlos ausgestaltet, da die tragbaren Datenträger inzwischen vermehrt sowohl eine kontaktbehaftete Schnittstelle als auch eine kontaktlose Schnittstelle. Die erste Kommunikationsverbindung ist dabei insbesondere gemäß einer der ISO/IEC 14443, ISO/IEC 15693, ISO/IEC 18092 oder ISO/IEC 7816 ausgestaltet.

Die Serverinstanz weist insbesondere eine zweite Kommunikationsverbindung mit der Clientinstanz aufweist, um die Authentisierungsanfrage zu senden, die erste Prüfsumme zu erhalten und den eingegebenen Datensatz zu erhalten. Die zweite Kommunikationsverbindung ist insbesondere eine sichere Internetverbindung unter Verwendung des hybriden Verschlüsselungsprotokolls "Transport Layer Security, TLS" oder "Secure Sockets Layer, SSL". Dazu ist ein Webbrowser auf der Clientinstanz installiert, der die sichere Verbindung mit der Serverinstanz herstellt. Somit ist die Verbindung mit Hilfe einer standardisierten, wenig komplexen Infrastruktur hergestellt.

In einer bevorzugten Ausgestaltung erfolgt das Eingeben des Datensatzes durch die Person in einen Webbrowser der Clientinstanz über ein Eingabemittel der Clientinstanz.

In einer besonderen Ausgestaltung wird der eingegebene Datensatz vor dem Erhalten in der Serverinstanz umformatiert, sodass sichergestellt wird, das beim Errechnen der ersten und der zweiten Prüfsumme das gleiche Ergebnis herauskommt, wenn der zugrundeliegende Datensatz identisch war. Beispielsweise sollten Sonderzeichen aus dem Datensatz entfernt und Umlaute entsprechend umcodiert werden.

In einer bevorzugten Ausgestaltung ist die zweite Kommunikationsverbindung eine sichere Internetkommunikationsverbindung unter Verwendung eines X.509 Zertifikat. Das X.509 Zertifikat ist ein ITU-T Standard für Public-Key-Infrastruktur. Nahezu alle existierenden Webbrowser beinhalten eine vorkonfigurierte Liste vertrauenswürdiger Zertifizierungsstellen, deren ausgestellten SSL-Zertifikaten der Browser vertraut.

In einer bevorzugten Ausgestaltung wird die ersten Prüfsumme in das X.509 Zertifikat eingebracht wird. Hier ist insbesondere die Version 3 des X.509 Zertifikats geeignet, da diese das Einfügen weiterer Daten in sogenannten Erweiterungsdatenfeldern ermöglichen. Da die erste Prüfsumme insbesondere keine Rückschlüsse auf den basierenden Datensatz ermöglicht, kann diese erste Prüfsumme ohne weitere Kryptografiealgorithmen eingefügt werden. Die Person ist sofort bei der Serverinstanz identifiziert. Da diese Zertifikate zur Standardinfrastruktur jeder Client-Server Kommunikation gehören, wird der Aufwand für das Authentifizierungsverfahren drastisch reduziert, wesentlich vereinfacht obwohl ein hohes Maß an Flexibilität erhalten bleibt.

Im Erfindungsgrundgedanken ist ebenfalls ein tragbarer Datenträger zur Verwendung im vorhergehend beschriebenen Authentisierungsverfahren, wobei der Datenträger einen Speicherbereich zum sicheren Ablegen des zumindest einen Datensatzes; eine Berechnungseinheit zum Berechnen der ersten Prüfsumme anhand des zumindest einen Datensatzes; und eine Schnittstelleneinheit zum Senden der ersten Prüfsumme umfasst.

Im Erfindungsgrundgedanken ist ebenfalls eine Serverinstanz zur Bereitstellung von Dienstleistungen für eine Person, wobei vor der Bereitstellung der Dienstleistungen ein Verfahren zum Authentisieren erfolgt und wobei die Serverinstanz ein Kommunikationsmittel zum Kommunizieren mit dem Datenträger und/ oder der Clientinstanz aufweist, um die erste Prüfsumme und den eingegebenen Datensatz zu erhalten; Errechnungsmittel zum Errechnen einer zweiten Prüfsumme aufweist und Vergleichsmittel zum Vergleichen der ersten und der zweiten Prüfsumme aufweist.

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:
Figur 1 Ein erfindungsgemäßes System aus Datenträger, Clientinstanz und Serverinstanz zur Authentisierung einer Person an der Serverinstanz
Figur 2 Ein zur Figur 1 alternatives Ausführungsbeispiel der Erfindung
Figur 3 Ein Ablaufdiagramm des erfindungsgemäßen Verfahrens zum Authentifizieren einer Person gegenüber einer Serverinstanz
Figur 4 Ein erfindungsgemäßes X.509 Zertifikat mit eingebrachten ersten Prüfsummen

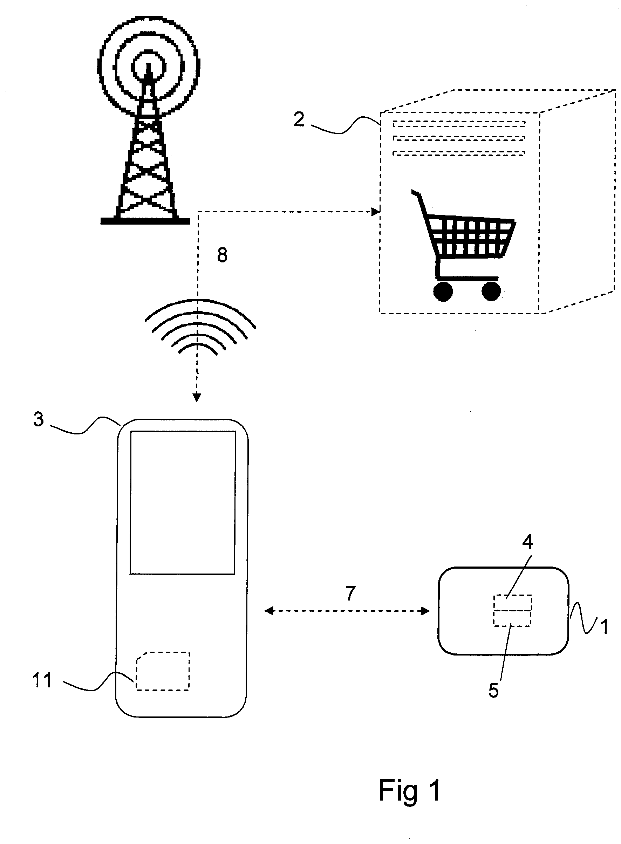

Figur 1 zeigt ein erfindungsgemäßes System aus Datenträger 1, Clientinstanz 3 und Serverinstanz 2. Dabei bietet die Serverinstanz 2 e-Services der eingangs beschriebenen Art an, wie durch einen Warenkorb dargestellt ist. Die Serverinstanz 2 ist beispielsweise ein Web-Shop, der Ware zum Verkauf als e-Service anbietet. Um einen angebotenen e-Service nutzen zu können, muss sich eine Person an der Serverinstanz 2 authentisieren. Dazu nimmt die Person ein elektronisches Identitätsdokument, kurz eID, als tragbaren Datenträger 1 zur Hilfe. Auf dem Datenträger 1 ist in einem integrierten Speicherbereich zumindest ein Datensatz 4 eingebracht. Zu diesem Datensatz 4 ist weiterhin eine erste Prüfsumme 5 abgelegt.

Während eines Bezahlvorgangs, bei dem sich die bezahlende Person an der Serverinstanz authentisieren muss, wird das erfindungsgemäße Verfahren angewendet. Dazu wird zwischen Clientinstanz 3 und Datenträger 1 eine erste Kommunikationsverbindung 7 aufgebaut. Diese Kommunikationsverbindung 7 ist entweder kontaktlos oder kontaktbehaftet und in einer Ausgestaltung gemäß einem der Standards ISO/IEC 14443, ISO/IEC 15693, ISO/IEC 18092 oder ISO/IEC 7816 aufgebaut.

Die Clientinstanz 3, hier ein Smart Phone, hat wiederum einen Webbrowser installiert, um Websites der Serverinstanz 2 darstellen zu können. Der Webbrowser hat gemäß TLS oder SSL eine sichere zweite Kommunikationsverbindung 8 zu der Serverinstanz aufgebaut. Diese zweite Kommunikationsverbindung wird gemäß Beispiel der Figur 1 über ein Mobilfunknetzwerk, beispielsweise GSM, UMTS oder zukünftiger Standards 3G etabliert.

Alternativ sind WLAN, WIFI, Bluetooth, LAN, WAN, MAN oder eine anders ausgestaltete Kommunikationsverbindung 8 zur Serverinstanz 2 denkbar.

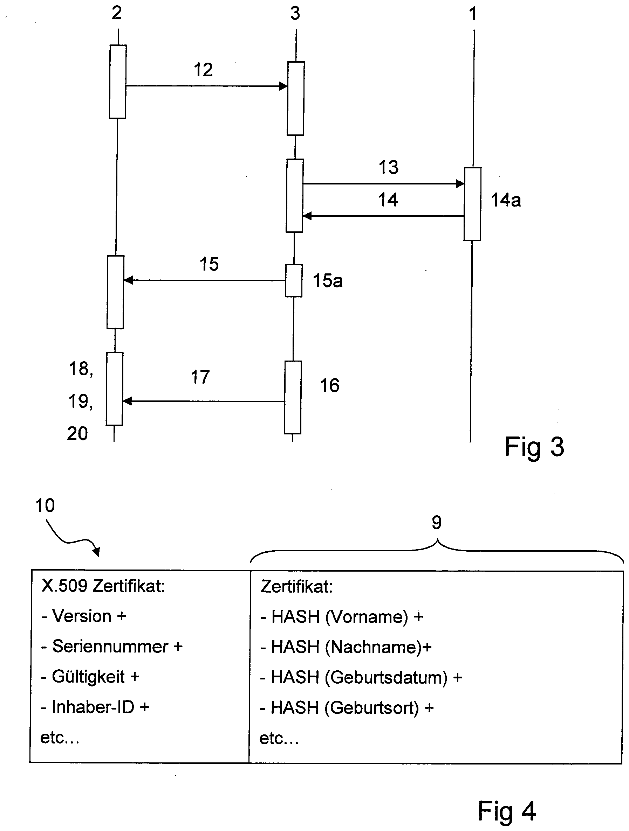

Das erfindungsgemäße Verfahren basiert auf der Annahme, dass ein von einer Behörde ausgestelltes elektronisches Dokument, insbesondere ein nationaler oder internationaler Identitätsdokument, ein elektronischer Reisepass oder ähnliches als Datenträger 1 derart vertrauenswürdig ist, dass ein Authentifizierungsverfahren basierend auf ersten Prüfsummen 5, die innerhalb des Datenträgers 1 errechnet werden oder innerhalb des Datenträgers 1 abgelegt sind, zu einer sicheren Authentisierung ausreichen.
Möchte eine Person im Internet einen e-Service nutzen, stellt ein Webbrowser auf der Clientinstanz 3 die zweite Kommunikationsverbindung 8 mit der Serverinstanz 2 her. Diese Kommunikationsverbindung 8 ist durch TLS oder SSL abgesichert und basiert auf der Übertragung mittels sicherer digitaler Zertifikate gemäß dem X.509 Zertifikatsstandard, welche sehr weit verbreitet sind und keine zusätzliche Infrastruktur in Clientinstanz 3 oder Serverinstanz 2 bedingen. In Figur 4 wird näher auf die X.509 Struktur eingegangen.

Erfindungsgemäß wird davon ausgegangen, dass die vom Datenträger 1 bereitgestellten ersten Prüfsummen 5 sicher sind. Schafft es eine Person, einen Datensatz 4 in die Clientinstanz 3 einzugeben und ergibt eine Errechnung einer zweiten Prüfsumme 6 in der Serverinstanz 2 eine Übereinstimmung mit der ersten Prüfsumme 5, so kann davon ausgegangen werden, dass die Person authentisch ist. Dabei kann nur ein Datensatz verwendet werden oder der Algorithmus zwingt zum Vergleichen mehrerer unterschiedlicher erster Prüfsummen 5 mit zweiten Prüfsummen 6 basierend auf einer Mehrzahl von Datensätzen 4. Der genaue Ablauf des erfindungsgemäßen Verfahrens erfolgt mit Beschreibung der Figur 3.

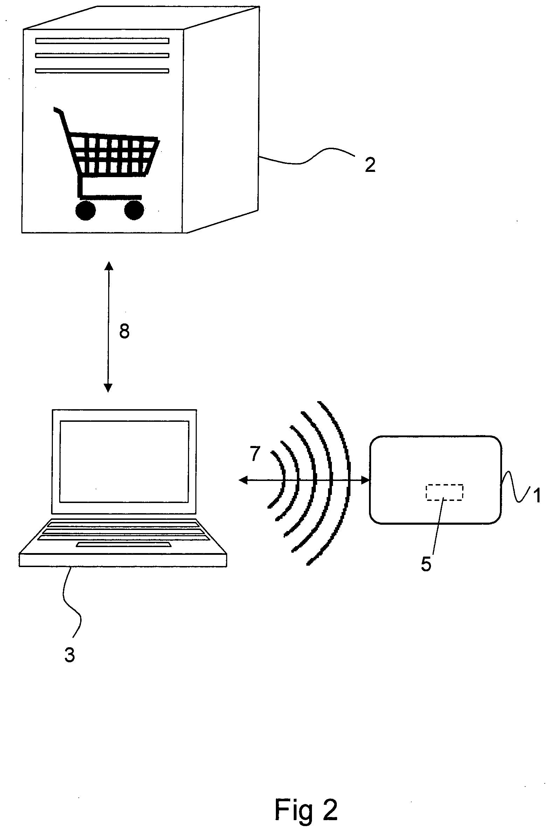

In Figur 2 ist ein zu Figur 1 alternatives System dargestellt. Im Folgenden wird nur auf die Unterschiede zwischen Figur 1 und Figur 2 eingegangen. Anstelle eines Smart Phones als Clientinstanz 3 ist hier ein Laptop dargestellt, der mittels einer TCP/IP Kommunikationsverbindung 8 mit der Serverinstanz verbunden ist. Diese Kommunikationsverbindung 8 ist über TLS oder SSL abgesichert. Ein weiterer Unterschied zu Figur 1 ist im Speicherbereich des Datenträgers 1 gegeben. Anstelle des Datensatzes 4 ist in Figur 2 nur die erste Prüfsumme in den Datenträger 1 eingebracht. Diese erste Prüfsumme 5 ist beispielsweise während eines Personalisierungsschritts bei der Herstellung des Datenträgers eingebracht worden. Alternativ ist im Vorfeld des erfindungsgemäßen Verfahrens über die erste Kommunikationsverbindung 7 die erste Prüfsumme 5 in den Datenträger 1 eingebracht worden.

Die erste Prüfsumme gemäß Figur 1 oder 2 basiert auf einem Datensatz 4, der die Person identifiziert. Als Datensatz 4 sind insbesondere personengebundene Daten, wie Nachname, Vorname, Geburtsdatum, Geburtsort, Wohnort, Wohnadresse, Größe, Haarfarbe, Augenfarbe etc zu verwenden. Die erste Prüfsumme 5 wird basierend auf diesem Datensatz 4 errechnet, wobei insbesondere Ein-Weg Algorithmen zu verwenden sind. Die Basis für eine erste Prüfsumme 5 kann dabei ein einziger Datensatz 4 sein (z.B. der Nachname), oder eine Gruppierung von Datensätzen 4. Beispielsweise wird die Gruppe Vorname+Nachname+Geburtsort als ein basierender Datensatz 4 verwendet, um die erste Prüfsumme 5 zu berechnen.

Ein Beispiel zum Berechnen einer ersten Prüfsumme ist insbesondere die Hashfunktion, auch Streuwertfunktion genannt. Sie ist eine Abbildung des Datensatzes 4 auf eine kleinere Datenmenge, als Hashcode oder Hashwert bzw. hier als erste Prüfsumme 5 bezeichnet. Die Hash- oder Streuwerte sind insbesondere skalare Werte aus einer begrenzten Teilmenge der natürlichen Zahlen. Eine hochwertige Hashfunktion zeichnet sich dadurch aus, dass für zwei unterschiedliche Datensätze 4 auch zwei unterschiedliche erste Prüfsummen 5 erhalten werden, sodass die Prüfsummen 5 zumindest in der Menge der verwendeten Datensätze 4 eindeutig ist. Ein Hashwert als erste Prüfsumme 5 ist daher eine nahezu eindeutige Kennzeichnung eines größeren Datensatzes 4, vergleichbar mit der Eindeutigkeit bei Identitätsbestimmungen eines Menschen über dessen Fingerabdrücke.

Es gibt eine Reihe von Hash-Algorithmen, die erfindungsgemäß zur Bildung einer ersten Prüfsumme verwendet werden können, insbesondere die Division-Rest-Methode, das Doppel-Hashing, das Brent-Hashing, das Kuckuckshashing, die multiplikative Methode, die Mittquardatmethode, die Zerlegungsmethode oder die Ziffernanalyse.

Um eine geeignete Hashfunktion auszuwählen, ist eine Reihe von Eigenschaften zu beachten, die im Folgenden kurz wiedergegeben werden:

Insbesondere sollen bei unterschiedlichen Datensätzen auch unterschiedliche Prüfsummen errechnet werden, also insbesondere keine kollidierenden Hashwerte bei unterschiedlichen Datensätzen auftreten. Weiterhin sollte die errechnete Prüfsumme 5 eine geringere Datenmenge aufweisen, als der basierende Datensatz 4, sodass eine Datenreduktion stattfindet. Zusätzlich sollten ähnliche Datensätze 4 bei der Errechnung völlig verschiedene Prüfsummen 5 ergeben. Im Idealfall verändert das Umkippen eines Bits im Datensatz 4 bereits die Hälfte aller Bits in der errechneten Prüfsumme 5. Der Wertebereich der Prüfsummen 5 sollte völlig ausgeschöpft werden, auch als Surjektivität bezeichnet. Ein wesentlicher Faktor ist die Effizienz der Berechnung, eine Prüfsumme 5 sollte ohne große Speicherbereichsaufwendung und ohne riesigen Rechenaufwand errechnet werden. Für möglichst sichere Prüfsummen 5 ist es weiterhin notwendig, dass ein Urbild-Angriff erfolglos bleibt. Daher sollte der Algorithmus zum Errechnen der Prüfsumme 5 eine Einwegfunktion sein. Auch die Errechnung eines zweiten Datensatzes ausgehend von einer ersten Prüfsumme 5 über einen ersten Datensatz 4 sollte unmöglich sein, der sogenannte Zweites-Urbild Angriff sollte so vermeidbar sein.

Aus allen diesen Kriterien wird daher ein Algorithmus bestimmt, der im Datenträger gestartet wird, um jeweils Prüfsummen 5 ausgehend von den im Datenträger 1 eingebrachten Datensätze 4 zu errechnen. Wie bereits erwähnt können auch nur die Prüfsummen 5 im Datenträger abgelegt sein, sodass eine Errechnung der Prüfsumme 5 während Authentifizierung entfallen kann.

Der Algorithmus, der ausgewählt wurde, um die erste Prüfsumme 5 zu errechnen, sollte insbesondere auch der Serverinstanz bekannt sein, da ausgehend von einem eingegebenen Datensatz 4 in der Clientinstanz 3 eine zweite Prüfsumme 6 mit dem gleichen Algorithmus errechnet werden sollte. Stimmen erste Prüfsumme 5 und zweite Prüfsumme 6 in einem Vergleichsschritt 19 überein, so kann davon ausgegangen werden, dass der eingegebene Datensatz mit dem auf der Prüfsumme 5 basierenden Datensatz 4 übereinstimmt.

In Figur 3 ist ein Ablaufdiagramm für das erfindungsgemäße Verfahren gezeigt. Auf Basis einer Authentisierungsanfrage 12 mit Hilfe der zweiten Kommunikationsverbindung 8 seitens der Serverinstanz 2 an die Clientinstanz 3, fordert die Clientinstanz über einen existierenden oder für diese Zwecke aufzubauende erste Kommunikationsverbindung 7 ein Zertifikat von dem Datenträger 1 an, siehe Schritt 13. Mit der Zertifikatsanforderung seitens der Clientinstanz 3 an dem Datenträger 1 können weitere Detailinformationen bezüglich des gewünschten e-Service oder des Serverinstanz 2 an den Datenträger übermittelt werden. Entsprechend der Ausführungsform gemäß Figur 1 wird nun basierend auf einen oder mehreren Datensätzen 4 eine erste Prüfsumme 5 berechnet. Es können, wie bereits beschrieben auch mehrere erste Prüfsummen berechnet werden, siehe Schritt 14a. Dabei können die Informationen bezüglich e-Service oder Serverinstanz 2 zur Auswahl des geeigneten Algorithmus beitragen.

Die zumindest eine erste Prüfsumme 5 wird gemäß Schritt 14 an die Clientinstanz 3 gesendet. Die Clientinstanz 3 wiederum integriert die erste Prüfsumme 5 in die zweite Kommunikationsverbindung 8, insbesondere durch einbringen der ersten Prüfsumme 5 in ein digitales x.509 Zertifikat, wie in Figur 4 gezeigt wird. Anschließend wird die erste Prüfsumme 5 an die Serverinstanz 2 gesendet, siehe Schritt 15, bevorzugt innerhalb einer sicheren Kommunikationsumgebung TLS oder SSL.

In einem Folgeschritt 16 wird die Person aufgefordert einen Datensatz 4 in den Webbrowser einzugeben, insbesondere über ein Eingabemittel der Clientinstanz 3. Der Datensatz sollte für eine erfolgreiche Authentisierung mit dem Datensatz, auf dessen Basis die erste Prüfsumme 5 berechnet wurde, übereinstimmen. Der eingegebene Datensatz 4 wird nun über die zweite Kommunikationsverbindung 8 an die Serverinstanz 2 gesendet.

Die Serverinstanz 2 hat zum jetzigen Zeitpunkt also zunächst die erste Prüfsumme 5 und anschließend einen eingegebenen Datensatz 4 erhalten. Im Erfindungsgrundgedanken kann auch erst ein Datensatz 4 eingegangen werden und anschließend eine Prüfsumme 5 angefordert werden, sodass Schritte 16 und 17 vor den Schritten 12 bis 15 ablaufen. In einer weiteren Alternative der Erfindung wird der eingegebene Datensatz 4 und die erste Prüfsumme 5 gleichzeitig übertragen.

In der Serverinstanz wird nun eine zweite Prüfsumme 6 auf Basis des eingegebenen Datensatzes 4 errechnet, siehe Schritt 18. Dabei ist der gleiche Algorithmus anzuwenden, der zur Errechnung der ersten Prüfsumme 5 angewendet worden ist. Für das Authentifizierungsverfahren kann prinzipiell ein Algorithmus festgelegt sein, der immer anzuwenden ist. Alternativ wird zwischen einer Anzahl von Algorithmen gewechselt, um die Sicherheit zu erhöhen. Eine codierte Information darüber, welcher Algorithmus bei der ersten Prüfsumme 5 angewendet wurde, ist der Serverinstanz 2 zur Verfügung zu stellen.

Die errechnete zweite Prüfsumme 6 wird nun mit der ersten Prüfsumme 5 im Schritt 19 verglichen. Ist die erste Prüfsumme 5 mit der zweiten Prüfsumme 6 identisch, authentifiziert die Serverinstanz 2 die Person entsprechend und die Person erhält die gewünschten e-Services.

Das gesamte Verfahren gemäß der Figur 3 kann natürlich weiterhin noch kryptografisch abgesichert werden, indem ein Verschlüsselungsmechanismus auf die eingegebenen Datensätze und die ersten Prüfsummen 5 angewendet wird.

Auf der Clientinstanz 3 sind ggf. noch weitere Umformatierungen des eingegebenen Datensatzes 4 notwendig. Insbesondere sollte ein standardisierter ASCII Zeichenkode verwendet werden, wobei länderspezifische Zeichen zu vermeiden sind. Beispielsweise sollten deutsche Umlaute wie Ä, Ö, Ü in entsprechende länderübergreifende Zeichen wie AE, OE, UE umformatiert werden. Leerzeichen sind aus den Datensätzen zu entfernen. Dadurch wird gewährleistet, dass stets der gleiche Datensatz zur Errechnung der ersten Prüfsumme 5 und der zweiten Prüfsumme 6 verwendet wird und die Authentisierung nicht aufgrund kommunikationsverbindungsspezifischen Eigenschaften scheitert.

In Figur 4 ist ein erfindungsgemäßes Zertifikat einer Clientinstanz 3 zum Versenden an eine Serverinstanz 2 gezeigt. Dieses Zertifikat basiert auf dem Zertifikatsstandard X.509. Ein derartiges Zertifikat enthält die Versionsnummer, die Seriennummer sowie die Gültigkeit des Zertifikats. Darüber hinaus sind Inhaber-ID, Schlüssel-ID und viele weitere Informationen in dem Zertifikat enthalten. Erfindungswesentlich ist hierbei, dass in der Version V3 des X.509 Standards weitere Datenfelder, sogenannte Extension, vorgesehen sind, in denen weitere Daten eingebracht werden können. Diese Extension der X.509 V3 werden nun dazu verwendet, die erste Prüfsumme 5 unterzubringen. Wie in Figur 4 gezeigt, besitzt das Zertifikat 10 die X.509 Standardisierung und gemäß Erweiterung 9 sind erste Prüfsummen 5 eingebracht. Wie hier eindeutig zu erkennen ist, wurden 4 verschiedene erste Prüfsummen 5 eingebracht. Diese Prüfsummen 5 sind mittels eines Hashalgorithmus über die unterschiedlichen Datensätze berechnet worden. Basierend auf diese vier ersten Prüfsummen 5 wurden vier personenbezogene Datensätze 4 verwendet, nämlich der Datensatz "VORNAME", der Datensatz "NACHNAME", der Datensatz "Geburtsdatum" und der Datensatz "Geburtsort". Die vier errechneten Prüfsummen 5 wurden im Klartext in das Extension-Datenfeld des X.509 Zertifikats 10 eingebracht.

Wie bereits erwähnt können Hashalgorithmen von Datensatz zu Datensatz unterschiedlich sein. Für eine erfolgreiche Authentifizierung ist es allerdings notwendig, dass der Serverinstanz 2 bekannt ist, welche Prüfsumme 5 mit welchem Algorithmus berechnet wurde.

In einer bevorzugten Ausgestaltung der Erfindung werden stets alle Prüfsummen 5 des Datenträgers 1 an die Clientinstanz 2 gesendet. Die ersten Prüfsummen 5 haben dabei eine feste Reihenfolge in dem Erweiterungsdatenfeld des Zertifikats 10. Ist eine Prüfsumme nicht verfügbar, beispielsweise der Geburtsname einer männlichen Person, bleibt die entsprechende Stelle im Zertifikat 10 leer.

Der Benutzer entscheidet während der Authentifizierung selbst, welche Daten er von sich an die Serverinstanz 2 senden möchte und füllt nur diejenigen Datenfelder in einem Web-Formular des Webbrowsers aus, die er ausfüllen möchte. Der Webbrowser übermittelt die eingegebenen Daten an die Serverinstanz 2 mit der Information, welche Datenfelder im Webbrowser nicht ausgefüllt worden sind. Entweder das Webformular, der Webbrowser oder die Serverinstanz ordnen die eingegebenen Datensätze den entsprechenden ersten Prüfsummen 5 zu, sodass eine errechnete zweite Prüfsumme 6 basierend auf einem eingegebenen Datensatz mit der richtigen ersten Prüfsumme 5 verglichen wird.

In einer nicht dargestellten Variante der Erfindung befinden sich die erfindungsgemäßen ersten Prüfsummen 5 nicht auf einem Datenträger 1 sondern auf einem Sicherheitselement 11 in der Clientinstanz 3. Das Sicherheitselement 11 ist beispielsweise die SIM Karte in einem Smart Phone. Alternativ ist das Sicherheitselement ein vertrauenswürdiges Softwareelement und als Teil des Betriebssysternkernels, auch Trustzone genannt, mit der Bereitstellung vertrauenswürdiger Daten beauftragt. Die Errechnung und Bereitstellung der Prüfsummen 5 wird dann durch eine vertrauenswürdige Anwendung, auch als Trustlet bezeichnet, sichergestellt.
In einer nicht dargestellten Variante wird die Prüfsumme 5 dynamisch generiert. In einem ersten Beispiel wird jedem Datensatz 4 eine individuelle Zufallszahl vorangestellt. Die Zufallszahl wird vom Datenträger 1 generiert. Sowohl Datensatz 4 als auch Zufallszahl werden nun in das Kommunikationszertifikat integriert, Schritt 15a, und der Serverinstanz 2 zugesendet, Schritt 15. In einem zweiten Beispiel wird für alle Datensätze 4 dieselbe Zufallszahl pro Authentifizierungsanfrage 12 verwendet und in das Kommunikationszertifikat 10 integriert. Die Zufallszahl wird der sich authentifizierenden Person durch die Clientinstanz 3 angezeigt und ebenfalls als einzugebender Datensatz 4 an die Serverinstanz 2 gesendet. In der Serverinstanz 2 wird der/die Datensatz/Datensätze 4 mit Hilfe der vorangestellten Zufallszahl verifiziert (zweite Prüfsumme 6) und bei Übereinstimmung der ersten Prüfsumme 5 mit der zweiten Prüfsumme 6 erfolgt die Authentisierung der Person durch die Serverinstanz 2.

Insbesondere bei der Verwendung der Zufallszahlen erzeugt der Datenträger 1 pro Authentisierungsanfrage 12 eine Signatur über das zu sendende Zertifikat. Das Zertifikat ist daher authentisierungsanfragenindividuell. Die Datensätze sind somit besser geschützt und sicherer.

In einer Weiterbildung wird eine Transaktionsnummer für jede Authentisierungsanfrage 12 im Datenträger 1 generiert. Diese Transaktionsnummer wird wie die Zufallszahl der Serverinstanz bereitgestellt. Durch Verwenden von unterschiedlichen Transaktionsnummern und Zufallszahlen pro Authentisierungsanfrage 12 werden der Serverinstanz 2 Datensätze 4 bereitgestellt, die nur für diese Anfrage 12 gültig sind und einem Dritten nichts nutzen, da auf Basis einer weiteren Anfrage 12 andere Zertifikate 10 gesendet werden. Der Dritte weiß daher nicht, inwieweit der Datensatz durch Zufallszahlen oder Transaktionsnummern verändert wurde.

Alternativ und andeutungsweise in Figur 1 dargestellt ist ausschließlich eine vertrauenswürdige Instanz in der Clientinstanz 3, beispielsweise ein Sicherheitselement 11 wie SIM-Karte, sichere SD-Karte, Trustzone, in der Lage auf den Datenträger 1 zuzugreifen und die entsprechenden ersten Prüfsummen 5 anzufordern.

### Bezugszeichenliste

1 Tragbarer Datenträger, elektronisches Identitätsdokument
2 Serverinstanz, Online-Shop
3 Clientinstanz
4 Datensatz
5 Erste Prüfsumme über Datensatz
6 Zweite Prüfsumme über Datensatz
7 Erste Kommunikationsverbindung
8 Zweite Kommunikationsverbindung
9 Zertifikat mit ersten Prüfsumme(n)
10 X.509 Zertifikat
11 Sicherheitselement, SIM-Karte
12 Authentisierungsanfrage
13 Zertifikatsanforderung
14 Senden der ersten Prüfsumme
   14a Errechnen der ersten Prüfsumme
15 Senden der ersten Prüfsumme
   15a Integrieren der ersten Prüfsumme in Kommunikationszertifikat
16 Eingeben des Datensatzes durch Benutzer
17 Erhalten des eingegebenen Datensatzes
18 Errechnen der zweiten Prüfsumme
19 Vergleichen von erster und zweiter Prüfsumme
20 Authentifizieren der Person auf Basis des Vergleichs

## Patentansprüche

1. Verfahren zum Authentisieren einer Person gegenüber einer Serverinstanz (2), wobei der Person ein tragbarer Datenträger (1) zugeordnet ist und der Datenträger (1) räumlich entfernt von der Serverinstanz (2) angeordnet ist mit den Verfahrensschritten:
- Senden einer Authentisierungsanfrage (12) von der Serverinstanz (2);
- Senden (14) mehrerer unterschiedlicher erster Prüfsummen an die Serverinstanz (2) als digitales Zertifikat von dem Datenträger (1) an die Serverinstanz (2), wobei die ersten Prüfsummen (5) anhand unterschiedlicher, die Person identifizierender Datensätze (4) errechnet werden;
- Erhalten (17) eingegebener Datensätze (4) in der Serverinstanz (2), wobei die Person nur diejenigen Datensätze eingibt (16), die zur Authentisierung der Person verwendet werden sollen;
- Errechnen (18) von jeweiligen Prüfsummen (6) in der Serverinstanz (2) anhand der eingegebenen Datensätze (4);
- Vergleichen (19) der jeweiligen ersten Prüfsummen (5) mit den jeweiligen zweiten Prüfsummen (6) in der Serverinstanz (2) und
- Authentifizieren (20) der Person durch die Serverinstanz (2) falls eine vorbestimmte Anzahl an Vergleichen (19) ergibt, dass die jeweils ersten Prüfsummen (5) mit den entsprechenden zweiten Prüfsummen (6) gleich sind.

2. Verfahren nach Anspruch 1, wobei:
- der Datenträger (1) eine erste Kommunikationsverbindung (7) mit einer Clientinstanz (3) aufweist, um die erste Prüfsumme (5) an die Clientinstanz (3) zu senden und
- die Serverinstanz (2) eine zweite Kommunikationsverbindung (8) mit der Clientinstanz (3) aufweist, um:
- die Authentisierungsanfrage (12) zu senden;
- der Datenträger (1) eine erste Kommunikationsverbindung (7) mit einer Clientinstanz (3) aufweist, um die erste Prüfsumme (5) an die Clientinstanz (3) zu senden und
- die Serverinstanz (2) eine zweite Kommunikationsverbindung (8) mit der Clientinstanz (3) aufweist, um:
- die Authentisierungsanfrage (12) zu senden;
- die erste Prüfsumme (5) zu erhalten (14) und
- den eingegebenen Datensatz (4) zu erhalten (17).

3. Verfahren nach einem der vorhergehenden Ansprüche, wobei das Eingeben (16) des Datensatzes (4) durch die Person in einen Webbrowser der Clientinstanz (3) erfolgt.

4. Verfahren nach einem der vorhergehenden Ansprüche, wobei die zweite Kommunikationsverbindung (8) eine sichere Internetkommunikationsverbindung unter Verwendung eines X.509 Zertifikats (10) ist und die erste Prüfsumme (5) in das X.509 Zertifikat (10) eingebracht wird.

5. Verfahren nach einem der vorhergehenden Ansprüche, wobei die erste Prüfsumme dynamisch unter Verwendung einer Zufallszahl errechnet wird.

6. Verfahren nach Anspruch 5, wobei für jede Authentifizierung eine neue Signatur über das Zertifikat (10) vom tragbaren Datenträger (1) erstellt wird.

7. Verfahren nach einem der vorhergehenden Ansprüche, wobei der Datenträger (1) für jede Authentisierung eine Transaktionsnummer errechnet und dem Benutzer angezeigt wird.

8. Verfahren nach einem der vorhergehenden Ansprüche, wobei das Errechnen (14a, 18) der ersten Prüfsumme (5) und der zweiten Prüfsumme (6) mittels eines Hash-Algorithmus erfolgt.

9. Verfahren nach einem der vorhergehenden Ansprüche, wobei jede erste Prüfsumme (5) mittels eines unterschiedlichen Algorithmus errechnet (14a) wird und wobei jede erste Prüfsumme (5) eine Information über den zur Errechnung (14a) verwendeten Algorithmus beinhaltet.

10. Verfahren nach einem der vorhergehenden Ansprüche, wobei der eingegebene Datensatz (4) vor dem Erhalten (17) in der Serverinstanz (2) umformatiert wird.

11. Verfahren nach einem der vorhergehenden Ansprüche, wobei zur Erstellung des Zertifikats (10) ein dynamischer, auf Basis eines Gruppenschlüssels errechneter kryptografischer Schlüssel verwendet wird.

12. Tragbarer Datenträger zur Verwendung als Authentisierungsmittel gemäß einem der vorhergehenden Ansprüche 1 bis 11, wobei der Datenträger aufweist:
- einen Speicherbereich zum sicheren Ablegen des zumindest einen Datensatzes;
- eine Berechnungseinheit zum Berechnen der ersten Prüfsumme anhand des zumindest einen Datensatzes; und
- eine Schnittstelleneinheit zum Senden der ersten Prüfsumme.

13. Tragbarer Datenträger gemäß Anspruch 12, wobei alternativ zum Ablegen des zumindest einen Datensatzes die erste Prüfsumme abgelegt ist.

14. Serverinstanz zur Bereitstellung von Dienstleistungen für eine Person, wobei vor der Bereitstellung der Dienstleistungen ein Verfahren zum Authentisieren gemäß einer der Ansprüche 1 bis 11 erfolgt ist und wobei die Serverinstanz:
- Kommunikationsmittel zum Kommunizieren mit dem Datenträger und/ oder der Clientinstanz aufweist, um die erste Prüfsumme und den eingegebenen Datensatz zu erhalten
- Errechnungsmittel zum Errechnen einer zweiten Prüfsumme aufweist und
- Vergleichsmittel zum Vergleichen der ersten und der zweiten Prüfsumme aufweist.

## Claims

1. A method for authenticating a person vis-à-vis a server instance (2), wherein to the person a portable data carrier (1) is allocated and the data carrier (1) is arranged in spatially removed manner from the server instance (2), with the method steps of:
- sending an authentication request (12) from the server instance (2);
- sending (14) several different first checksums to the server instance (2) as a digital certificate from the data carrier (1) to the server instance (2), wherein the first checksums (5) are computed from different data sets (4) identifying the person;
- receiving (17) input data sets (4) in the server instance (2), wherein the person inputs (16) only those data sets (4) which are to be employed for authenticating the person;
- computing (18) respective checksums (6) in the server instance (2) from the input data sets (4);
- comparing (19) the respective first checksums (5) with the respective second checksums (6) in the server instance (2) and
- authenticating (20) the person by the server instance (2) if a predetermined number of comparisons (19) yields that the respective first checksums (5) and the respective second checksums (6) are equal.

2. The method according to claim 1, wherein:
- the data carrier (1) has a first communication connection (7) with a client instance (3) for sending the first checksum (5) to the client instance (3) and
- the server instance (2) has a second communication connection (8) with the client instance (3) for:
- sending the authentication request (12);
- the data carrier (1) has a first communication connection (7) with a client instance (3) for sending the first checksum (5) to the client instance (3) and
- the server instance (2) has a second communication connection (8) with the client instance (3) for:
- sending the authentication request (12);
- receiving (14) the first checksum (5) and
- receiving (17) the input data set (4).

3. The method according to any one of the preceding claims, wherein the inputting (16) of the data set (4) by the person is effected in a web browser of the client instance (3).

4. The method according to any one of the preceding claims, wherein the second communication connection (8) is a secure Internet communication connection employing an X.509 certificate (10), and the first checksum (5) is introduced into the X.509 certificate (10).

5. The method according to any one of the preceding claims, wherein the first checksum is computed dynamically, employing a random number.

6. The method according to claim 5, wherein for each authentication a new signature is created over the certificate (10) of the portable data carrier (1).

7. The method according to any one of the preceding claims, wherein the data carrier (1) computes a transaction number for each authentication which is indicated to the user.

8. The method according to any one of the preceding claims, wherein the computing (14a, 18) of the first checksum (5) and of the second checksum (6) is effected by means of a hash algorithm.

9. The method according to any one of the preceding claims, wherein each first checksum (5) is computed (14a) by means of a different algorithm, and wherein each first checksum (5) includes an information item about the algorithm employed for computing (14a).

10. The method according to any one of the preceding claims, wherein the input data set (4) is reformatted before receipt (17) in the server instance (2).

11. The method according to any one of the preceding claims, wherein for creating the certificate (10) a dynamic cryptographic key is employed that is computed on the basis of a group key.

12. A portable data carrier for being employed as a means for authentication according to any one of the preceding claims 1 to 12, wherein the data carrier has:
- a memory area for securely storing of the at least one data set;
- a computing unit for computing the first checksum from the at least one data set; and
- an interface unit for sending the first checksum.

13. The portable data carrier according to claim 12, wherein alternatively to storing the at least one data set, the first checksum is stored.

14. A server instance for making available services to a person, wherein, prior to making the services available, a method for authentication has been effected according to any one of claims 1 to 11, and wherein the server instance has:
- communication means for communicating with the data carrier and/or the client instance, in order to receive the first checksum and the input data set
- computing means for computing a second checksum and
- comparing means for comparing the first and the second checksum.

## Revendications

1. Procédé d'authentification d'une personne vis-à-vis d'une instance de serveur (2), cependant que, à la personne, un support de données (1) portable est affecté, et que le support de données (1) est agencé de manière spatialement éloignée de l'instance de serveur (2), comprenant les étapes de procédé :
- envoi d'une demande d'authentification (12) de l'instance de serveur (2) ;
- envoi (14) de plusieurs premières sommes de contrôle différentes à l'instance de serveur (2) en tant que certificat numérique du support de données (1) à l'instance de serveur (2), cependant que les premières sommes de contrôle (5) sont calculées à l'aide de différents jeux de données (4) identifiant la personne ;
- réception (17), dans l'instance de serveur (2), de jeux de données (4) entrés, cependant que la personne n'entre (16) que les jeux de données qui doivent être utilisés pour l'authentification de la personne ;
- calcul (18) de sommes de contrôle (6) respectives dans l'instance de serveur (2) à l'aide des jeux de données (4) entrés ;
- comparaison (19) des premières sommes de contrôle (5) respectives avec les deuxièmes sommes de contrôle (6) respectives dans l'instance de serveur (2), et
- authentification (20) de la personne par l'instance de serveur (2) dans le cas où un nombre prédéterminé de comparaisons (19) révèle que les respectivement premières sommes de contrôle (5) sont égales aux deuxièmes sommes de contrôle (6) correspondantes.

2. Procédé selon la revendication 1, cependant que :
- le support de données (1) comporte une première liaison de communication (7) avec une instance de client (3) afin d'envoyer la première somme de contrôle (5) à l'instance de client (3), et
- l'instance de serveur (2) comporte une deuxième liaison de communication (8) avec l'instance de client (3) afin de :
- envoyer la demande d'authentification (12) ;
- le support de données (1) comporte une première liaison de communication (7) avec une instance de client (3) afin d'envoyer la première somme de contrôle (5) à l'instance de client (3), et
- l'instance de serveur (2) comporte une deuxième liaison de communication (8) avec l'instance de client (3) afin de :
- envoyer la demande d'authentification (12) ;
- recevoir (14) la première somme de contrôle (5), et
- recevoir (17) le jeux de données (4) entré.

3. Procédé selon une des revendications précédentes, cependant que l'entrée (16) du jeux de données (4) est effectuée par la personne dans un navigateur web de l'instance de client (3).

4. Procédé selon une des revendications précédentes, cependant que la deuxième liaison de communication (8) est une liaison de communication Internet sécurisée utilisant un certificat X.509 (10), et que la première somme de contrôle (5) est introduite dans le certificat X.509 (10).

5. Procédé selon une des revendications précédentes, cependant que la première somme de contrôle est calculée dynamiquement en utilisant un chiffre aléatoire.

6. Procédé selon la revendication 5, cependant que, pour chaque authentification, une nouvelle signature est générée sur le certificat (10) par le support de données (1) portable.

7. Procédé selon une des revendications précédentes, cependant que le support de données (1) calcule pour chaque authentification un numéro de transaction, lequel est indiqué à l'utilisateur.

8. Procédé selon une des revendications précédentes, cependant que le calcul (14a, 18) de la première somme de contrôle (5) et de la deuxième somme de contrôle (6) est effectué au moyen d'un algorithme hash.

9. Procédé selon une des revendications précédentes, cependant que chaque première somme de contrôle (5) est calculée (14a) au moyen d'un algorithme différent, et cependant que chaque première somme de contrôle (5) contient une information sur l'algorithme utilisé pour le calcul (14a).

10. Procédé selon une des revendications précédentes, cependant que le jeu de données (4) entré est reformaté avant la réception (17) dans l'instance de serveur (2).

11. Procédé selon une des revendications précédentes, cependant que, pour la génération du certificat (10), une clé cryptographique dynamique calculée sur la base d'une clé de groupe est utilisée.

12. Support de données portable destiné à être utilisé en tant que moyen d'authentification suivant une des revendications précédentes de 1 à 11, cependant que le support de données comporte :
- une zone mémoire pour le stockage sécurisé du au moins un jeu de données ;
- une unité de calcul pour le calcul de la première somme de contrôle à l'aide du au moins un jeu de données ; et
- une unité d'interface pour l'envoi de la première somme de contrôle ;

13. Support de données portable selon la revendication 12, cependant que, en tant qu'alternative au stockage du au moins un jeu de données, c'est la première somme de contrôle qui est stockée.

14. Instance de serveur destinée à la mise à disposition de services pour une personne, cependant que, avant la mise à disposition des services, un procédé d'authentification suivant une des revendications précédentes de 1 à 11 est effectué, et cependant que l'instance de serveur :
- comporte des moyens de communication pour la communication avec le support de données et/ou avec l'instance de client afin de recevoir la première somme de contrôle et le jeu de données entré
- comporte des moyens de calcul pour le calcul d'une deuxième somme de contrôle, et
- comporte des moyens de comparaison pour la comparaison de la première somme de contrôle et de la deuxième somme de contrôle.
